# EUROPEAN PATENT SPECIFICATION

(11) **EP 1 188 719 B1**
(45) Date of publication and mention of the grant of the patent: **03.08.2005**
(21) Application number: 01119237.4
(22) Date of filing: 09.08.2001
(51) Int. Cl.: C02F 1/461, C02F 1/00

(54) **Acidic liquid apparatus**
Vorrichtung zur Herstellung einer säurehaltigen Flüssigkeit
Dispositif pour produire une liquide acide

(30) Priority: 09.08.2000 JP 2000241387
(43) Date of publication of application: 20.03.2002
(73) Proprietor: MIKUNI CORPORATION, Chiyoda-ku, Tokyo (JP)
(72) Inventor: Kasuya, Shoji, Mikuni Corporation, Odawara-shi, Kanagawa (JP)
(74) Representative: Betten & Resch

(56) References cited:
- EP-A- 0 792 584
- US-A- 3 996 126
- PATENT ABSTRACTS OF JAPAN vol. 1997, no. 11, 28 November 1997 (1997-11-28) & JP 09 174054 A (KYOEI AQUA TEC KK), 8 July 1997 (1997-07-08)
- PATENT ABSTRACTS OF JAPAN vol. 1996, no. 05, 31 May 1996 (1996-05-31) -& JP 08 024863 A (YOSHIDA DENTAL MFG CO LTD), 30 January 1996 (1996-01-30)

## Description

### Field of the Invention

The present invention relates to an apparatus obtaining acidic water by electrolyzing an inorganic salt solution.

### Description of Related Art

Technology where diluted electrolytic solution of a chloride of an alkaline metal is subjected to electrolysis by employing an electrolytic bath where passive electrodes of platinum or platinum alloy are positioned in the electrolytic bath interposed by a diaphragm of a charged membrane constituted by film-shaped ion exchange resin or a non-charged membrane having a microporous structure, anode electrolyte (acidic water) of a low pH created by electrolysis on the negative electrode side is extracted, with this then being sterilized or disinfected, is well known (Patent Application Laid-open No. Hei. 11-90442). Technology where electrolytic water is produced using an electrolytic bath not possessing a membrane is also well known (Japanese Patent Laid-open Publication Hei. 6-246272).

Anode electrolytic water created on the anode side includes hypochlorous acid. The strong oxidation and chlorination operation of the hypochlorous acid can therefore be utilized in sterilization and disinfection. This kind of utilization method is widely employed in medical equipment, etc. Minute amounts of ozone and dissolved oxygen included in the hypochlorous acid cause a granulation generation accelerating operation and research is therefore being carried out into utilizing this to provide assistance in surgical treatment. Further, it is well known that the beneficial action of electrolytic water decreases with the passage of time after being manufactured. It is therefore preferable for the electrolytic water to be used directly after being made.

Devices for manufacturing electrolytic water are equipped with an electrolytic bath and pump etc. and are therefore relatively large items installed in hospitals, etc. It is therefore the object of the present invention to provide an electrolytic water manufacturing device that can be used by individuals, and where just the required amount of electrolytic water can be provided directly after production at arbitrary times.

In order to resolve the aforementioned problems and achieve the aforementioned object, the present invention sets out to provide an acidic water atomizer capable of providing arbitrary amounts of acidic water in a portable manner and at arbitrary times and locations.

An acidic liquid apparatus is also known from EP 0 792 584. A source liquid tank, a waste liquid tank, and a pump are located in a base unit an an alectrolyzing unit and a spraying unit are located in a separate handheld unit connected to the base unit through a harness.

### SUMMARY OF THE INVENTION

The present inventionis defined in independent claim 1. The dependent claims define embodiments of the invention.

An acidic liquid apparatus, comprises a casing, a source liquid tank, a pump, an electrolytic bath, spraying means, a waste liquid tank, a waste liquid pipe, a control unit, and a power supply. The source liquid tank is provided within the casing. The electrolytic bath is for electrolyzing the supplied source liquid into acidic water and alkaline water. The pump is for supplying source liquid within the source liquid tank to the electrolytic bath. The spraying means are for spraying acidic water created in the electrolytic bath to outside of the casing. The waste liquid pipe connects the electrolyte bath and the waste liquid tank and is for drawing alkaline liquid created by the electrolytic bath to a waste liquid tank. The control unit is for controlling operation of the spraying means, the electrolytic bath, and the pump. The power supply drives the pump, electrolytic bath, atomizing means and control unit.

According to one embodiment, the source liquid tank is located above the pump, and the waste liquid tank is located below the pump. This enables to use gravity to reduce the necessary pumping power.

According to one embodiment the spraying means employs a piezo-oscillator fitted to a perforated plate. This gives a particularly fine and comfortable spraying effect.

Preferable the apparatus is in the form of a handheld device. This makes its use at arbitrary places particularly easy and comfortable.

Preferably the casing has an elongated shape with an intermediate section having a cross section smaller than the upper and the lower section. This makes it easy to hold the device in the hand of a user so that it does not slip out of a user's hand.

Preferably the apparatus comprises a non-contact charging device. This makes it suitable e.g. for use in bathrooms.

Preferably there is provided a movable cover for the spraying means which protects the spraying means from dirt and from being damaged.

Preferably both tanks have a cover which can be opened and closed and which enables filling and emptying of the tanks without disassembling the apparatus.

### BRIEF DESCRIPTION OF THE DRAWINGS

FIG. 1 a view showing an outline configuration for an example of an acidic water atomizer of the present invention.
FIG. 2 is an enlarged view showing the structure of the electrolytic bath and atomizing means of FIG. 1.
Fig. 3 is a side view showing a shae of an acidic liquid apparatus according to an embodiment of the invention.

### DETAILED DESCRIPTION OF THE PREFERRED EMBODIMENTS

The following is a detailed description, with reference to the drawings, of the present invention.

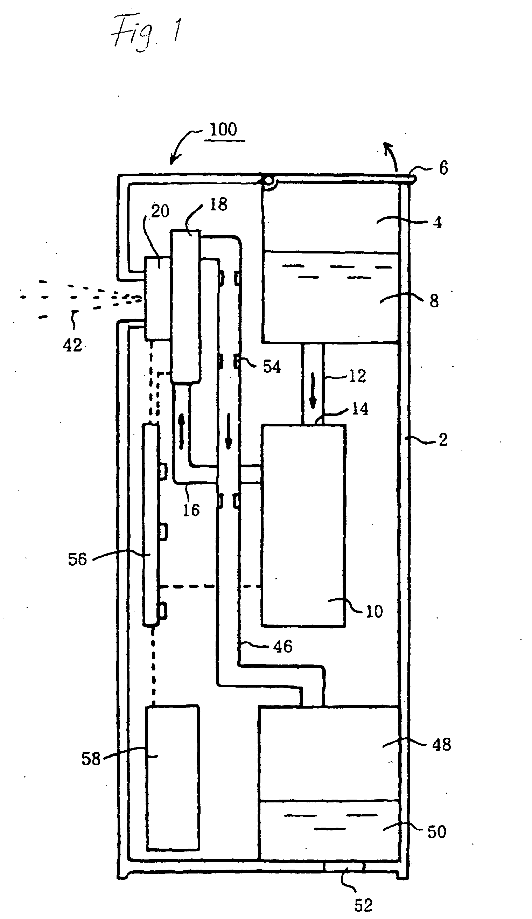

FIG. 1 is an outline showing an example of an acidic water atomizer of the present invention. In FIG. 1, numeral 100 indicates an acidic water atomizer, with a synthetic resin casing 2 being formed substantially in the shape of a rectangular parallelepiped. A source liquid tank 4 is formed at an upper part within the casing 2. A water supply cover 6 is formed at the upper part of the source liquid tank 4. Electrolyte source liquid 8 can then be supplied to within the source liquid tank from outside of the casing 2 by opening the cover 6.

A pump 10 is fitted towards the lower end of the source liquid tank 4. Electrolyte source liquid within the source liquid tank 4 can then be supplied to a water absorption opening 14 of the pump 10 via a source liquid supply pipe 12. Electrolyte source liquid 8 supplied to the pump 10 is then sent under pressure by the pump 10 to an electrolytic bath 18 via a delivery pipe 16.

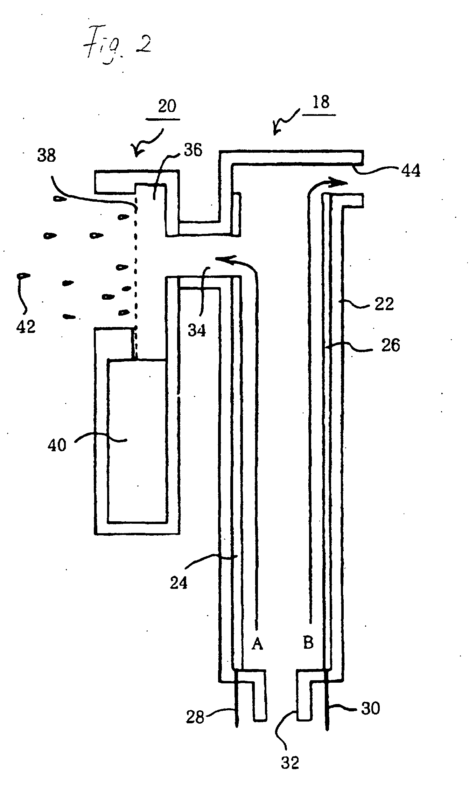

FIG. 2 is an enlarged view showing an electrolytic bath 18 and atomizing means 20 (described later) connected to the electrolytic bath 18. The electrolytic bath 18 has an anode 24 and a cathode 26 located in parallel with respect to each other within a flat electrolytic bath casing 22. Numeral 28 indicates an anode terminal connected to the anode 24 and numeral 30 indicates a cathode terminal connected to the cathode 26.

Electrolyte source liquid supplied from the pump 10 is supplied to within the electrolytic bath 18 from an inflow port 32 formed in a lower part of the electrolytic bath 18. When the electrolyte source liquid moves towards the top of the electrolytic bath 18 while maintaining a laminar flow, acidic water is created in the vicinity of the anode 24 and alkaline water is created in the vicinity of the cathode 26 as a result of electrolysis resulting from the application of a voltage across the anode 24 and the cathode 26.

The electrolyte source liquid within the electrolytic bath 18 flows as a laminar flow. The generated acidic water therefore flows upwards as shown by arrow A along the surface of the anode 24 and only acidic water is supplied to an atomizing chamber 36 of the atomizing means 20 via an extraction hole 34 formed at a side of the upper part of the electrolytic bath 18.

Numeral 38 indicates a perforated plate separating the atomizing chamber 36 of the atomizing means 20 from the outside. The perforated plate 38 has a multiplicity of pores having diameters of 18 to 24µm, and is fixed to a piezo-oscillator 40. The perforated plate 38 coupled to the piezo-oscillator 40 therefore oscillates when the piezo-oscillator 40 is made to oscillate as a result of the application of an alternating current or a pulse voltage. Acidic water filling up the atomizing chamber 36 is then sprayed to outside as fine droplets 42 via the pores formed in the perforated plate 38.

Alkaline water created within the electrolytic bath 18 moves upwards along the cathode 26 as shown by the arrow B in FIG. 2, is sent to a waste liquid tank 48 provided at the lower part of the pump 10 along a waste liquid pipe 46 coupled to a waste liquid opening 44, and is temporarily stored as waste liquid 50 (refer to FIG. 1). Numeral 52 is a waste liquid extraction hole formed at the lower part of the waste liquid tank 48.

The waste liquid pipe 46 has a relatively large diameter compared with the amount of waste liquid flowing within it. When waste liquid is flowing through the pipe, waste liquid only flows through part of the diameter-direction cross-section of the waste liquid pipe 46 and does not occupy the whole cross-section of the waste liquid pipe 46. The endless sucking in of source liquid into the waste liquid tank 48 can therefore be prevented by not employing a siphoning operation based on the height difference of the source liquid tank 4 and the waste liquid tank 48 due to the waste liquid pipe 46 having a large diameter.

Numeral 54 indicates a plurality of reverse flow preventing rings (three in the drawing) inserted into the waste liquid pipe 46, with these rings 54 narrowing the internal diameter of the waste liquid pipe 46 by half. The waste liquid 50 within the waste liquid tank 48 therefore does not flow in reverse directly into the electrolytic bath 18 even if the acidic water atomizer 100 of the present invention tilts during use, due to the rings 54 being provided.

Numeral 56 indicates a control unit incorporating a microprocessor, for controlling the pump 10, electrolytic bath 18 and atomizing means 20, etc. Numeral 58 indicates a drive supply for supplying power to the control unit 56, pump 10, electrolytic bath 18 and atomizing means 20, etc. Either a primary battery or a secondary battery may be employed as a driving supply.

An acidic water atomizer of the configuration shown in FIG. 1 employs a 5cm x 5cm x 18cm casing. An electrolytic bath where two 20mm x 23.6mm rectangular platinum electrodes are lined up in parallel spaced by 0.18mm is employed. The volume of liquid sent by the pump is 25ml/min, and the electrolytic current density is 0.0286A/cm².

Sodium chloride solution of a concentration of 2500ppm is employed as the electrolyte source liquid.

The pump is made to operate by turning on a power supply switch (not shown) and the electrolyte source liquid 8 within the source liquid tank 4 is sent to the electrolytic bath 18 and electrolyzed. Acidic water generated by electrolysis is sprayed to outside via the perforated plate 38 of the atomizing means 20. On the other hand, alkaline water is sent from the electrolytic bath 18 to the waste liquid tank 48 via the waste liquid pipe 46. Spraying of the acidic water can then be stopped by turning off a switch.

The acidic water atomizer of the present invention is housed within a small casing.

This provides useful portability and enables use in arbitrary locations. As acidic water is made during use, there is not need to worry about a reduction in the operation of the acidic water with the passage of time.

Further, when the source liquid tank is located above the pump and the waste liquid tank is located below the pump, the pump is usually filled with source liquid and it is therefore difficult for air locks to occur.

Moreover, a siphoning effect can be prevented when a large diameter waste liquid pipe is employed. Reverse flow prevention which can e.g. the form of rings can be fitted to the waste liquid pipe to prevent reverse flow.

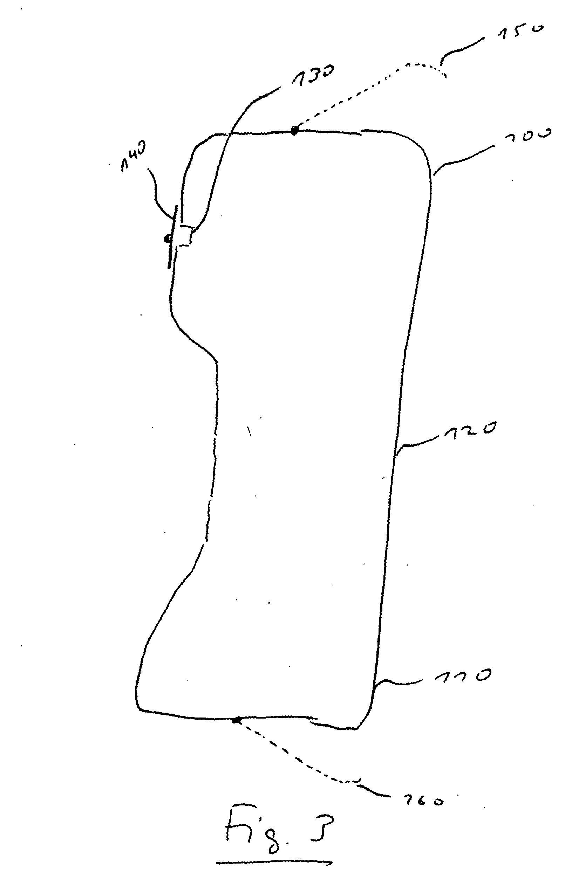

A further embodiment of the invention is shown in Fig. 3. As can be seen, the shape of the apparatus is such that it has an upper part 100, a lower part or section 110, and an intermediate section 120. Section 120 has a cross-section being smaller than the ones of the upper and the lower part, so that the apparatus can be held in the hand of a user comfortably. The source liquid tank (not shown) in this embodiment is located in the upper part 100 and the waste liquid tank is located in the lower part 110.

The spraying means 130 is located in the upper part and it is covered by a cover 140 such that it is protected from e.g. dirt and damages. The cover 140 can be shifted or removed such that the spraying means then can be used for dispensing the liquid acid.

The upper and the lower part respectively have covers 150, 160, shown as dashed lines in an opened status, which can be opened and closed to access the liquid tanks for filling or respectively emptying them.

## Claims

1. An acidic liquid apparatus (100), comprising:
a casing (2); a source liquid tank (4) provided within the casing;
an electrolytic bath (18), for electrolyzing the supplied source liquid into acidic water and alkaline water;
a pump (10) for supplying source liquid within the source liquid tank to the electroclytic bath;
spraying means (20) for spraying acidic water created in the electrolytic bath to outside of the casing;
a waste liquid pipe (46), connecting the electrolytic bath (18) and a waste liquid tank, for drawing alkaline liquid created by the electrolytic bath to said waste liquid tank;
a control unit (56) for controlling operation of the spraying means, the electrolytic bath, and the pump; and
a power supply (58) for driving the pump, electrolytic bath, spraying means and control unit, **characterized in that**
the cross section of said waste liquid pipe (46) is sufficiently large compared with the amount of waste liquid flowing therein to prevent a siphoning effect.

2. The acidic liquid apparatus (100) of claim 1, wherein said apparatus (100) is in the form of a handheld device.

3. The acidic liquid apparatus (100) of claim 1 or 2, wherein said apparatus (100) comprises a casing (10) which has an elongated shape with an intermediate section having a cross section smaller than the upper and the lower section.

4. The apparatus (100) of claim 3, wherein said source and said waste liquid tanks (4, 48) are located in the upper and the lower sections, respectively.

5. The apparatus of one of the preceding claims, further comprising at least one reverse flow preventing means (54).

6. The apparatus (100) of one of the preceding claims, wherein the source liquid tank (4) is located above the pump, and the waste liquid tank (48) is located below the pump.

7. The apparatus (100) of one of the preceding claims, wherein the spraying means (20) employs an atomizing means comprising a piezo-oscillator fitted to a perforated plate.

8. The apparatus (100) of one of the preceding claims, further comprising a non-contact charging device.

9. The apparatus (100) of one of the preceding claims, further comprising a movable cover (140) for covering said spraying means (20).

10. The apparatus (100) of one of the preceding claims, further comprising a switching means for switching said pump (10) on and off.

11. The apparatus (100) of one of the preceding claims, further comprising a cover (150, 160) which can be opened and closed for said source liquid tank (4) and said waste liquid tank (48).

## Patentansprüche

1. Gerät (100) zur Herstellung säurehaltiger Flüssigkeit, umfassend:
Ein Gehäuse (2); einen innerhalb des Gehäuses vorgesehenen Quellenflüssigkeitstank (4);
ein Elektrolysebad (18) zum Elektrolysieren der zugeführten Quellenflüssigkeit in säurehaltiges Wasser und alkalisches Wasser;
eine Pumpe (10) zum Zuführen von Quellenflüssigkeit innerhalb des Quellenflüssigkeitstanks zum Elektrolysebad;
eine Sprüheinrichtung (20) zum Versprühen von im Elektrolysebad erzeugtem säurehaltigen Wasser aus dem Gehäuse heraus;
ein Restflüssigkeitsrohr (46), das das Elektrolysebad (18) und einen Restflüssigkeitstank verbindet, um durch das Elektrolysebad erzeugte säurehaltige Flüssigkeit zum Restflüssigkeitstank zu leiten;
eine Steuereinheit (56) zum Steuern des Betriebs der Sprüheinrichtung, des Elektrolysebads, und der Pumpe; und
eine Energieversorgung (58) zum Antreiben der Pumpe, des Elektrolysebads, der Sprüheinrichtung und der Steuereinheit, **dadurch gekennzeichnet, dass**
der Querschnitt des Restflüssigkeitsrohrs (46) verglichen mit der darin fließenden Restflüssigkeitsmenge ausreichend groß ist, um einen Siphoneffekt zu verhindern.

2. Gerät (100) zur Herstellung säurehaltiger Flüssigkeit nach Anspruch 1, wobei das Gerät (100) in Form einer in der Hand zu haltenden Vorrichtung vorliegt.

3. Gerät (100) zur Herstellung säurehaltiger Flüssigkeit nach Anspruch 1 oder 2, wobei das Gerät (100) ein Gehäuse (10) umfasst, welches eine längliche Gestalt mit einem Zwischenabschnitt aufweist, der einen kleineren Querschnitt als der obere und der untere Abschnitt hat.

4. Gerät (100) nach Anspruch 3, wobei der Quellen- und der Restflüssigkeitstank (4, 48) im oberen bzw. im unteren Abschnitt angeordnet sind.

5. Gerät nach einem der vorhergehenden Ansprüche, ferner umfassend wenigstens eine Rückströmungsverhinderungseinrichtung (54).

6. Gerät (100) nach einem der vorhergehenden Ansprüche, wobei der Quellenflüssigkeitstank (4) über der Pumpe und der Restflüssigkeitstank (48) unter der Pumpe angeordnet sind.

7. Gerät (100) nach einem der vorhergehenden Ansprüche, wobei die Sprüheinrichtung (20) eine Zerstäubereinrichtung verwendet, die einen an einer perforierten Platte angebrachten Piezooszillator umfasst.

8. Gerät (100) nach einem der vorhergehenden Ansprüche, ferner umfassend eine kontaktfreie Ladevorrichtung.

9. Gerät (100) nach einem der vorhergehenden Ansprüche, ferner umfassend eine bewegliche Abdeckung (140) zum Abdecken der Sprüheinrichtung (20).

10. Gerät (100) nach einem der vorhergehenden Ansprüche, ferner umfassend eine Schalteinrichtung zum Ein- und Ausschalten der Pumpe (10).

11. Gerät (100) nach einem der vorhergehenden Ansprüche, ferner umfassend eine Abdeckung (150, 160), die geöffnet und geschlossen werden kann, für den Quellenflüssigkeitstank (4) und den Restflüssigkeitstank (48).

## Revendications

1. Dispositif de production de liquide acide (100), comprenant :
un carter (2) ;
un réservoir de liquide source (4), placé à l'intérieur du carter ;
un bain électrolytique (18) pour procéder à l'électrolyse du liquide source fourni, pour obtenir de l'eau acide et de l'eau alcaline ;
une pompe (10) pour fournir du liquide source, contenu dans le réservoir de liquide source, au bain électrolytique ;
des moyens de projection (20) pour projeter de l'eau acide, produite dans le bain électrolytique, vers l'extérieur du carter ;
un conduit de liquide résiduel (46), reliant le bain électrolytique (18) à un réservoir de liquide résiduel, afin d'acheminer le liquide alcalin, produit par le bain électrolytique, vers ledit réservoir de liquide résiduel ;
une unité de commande (56) pour commander le fonctionnement des moyens de projection, du bain électrolytique et de la pompe ; et
un source d'alimentation en énergie (58) pour attaquer la pompe, le bain électrolytique, les moyens de projection et l'unité de commande, **caractérisé en ce que**
la section transversale dudit conduit de liquide résiduel (46) est suffisamment grande, par rapport à la quantité de liquide résiduel qui s'y écoule, pour prévenir un effet de siphonnement.

2. Dispositif de production de liquide acide (100) selon la revendication 1, dans lequel ledit dispositif (100) se présente sous la forme d'un dispositif portatif.

3. Dispositif de production de liquide acide (100) selon la revendication 1 ou 2, dans lequel ledit dispositif (100) comprend un carter (10), qui présente une forme allongée, dont une partie intermédiaire a une section transversale plus petite que celle des parties supérieure et inférieure.

4. Dispositif (100) selon la revendication 3, dans lequel lesdits réservoirs de liquide source et de liquide résiduel (4, 48) sont situés, respectivement dans la partie supérieure et dans la partie inférieure.

5. Dispositif selon l'une des revendications précédentes, comprenant en outre au moins un moyen de prévention de retour de flux (54).

6. Dispositif (100) selon l'une des revendications précédentes, dans lequel le réservoir de liquide source (4) est situé au-dessus de la pompe, et le réservoir de liquide résiduel (48) est situé au-dessous de la pompe.

7. Dispositif (100) selon l'une des revendications précédentes, dans lequel les moyens de projection (20) utilisent des moyens d'atomisation, comprenant un oscillateur piézo-électrique, monté sur une plaque perforée.

8. Dispositif (100) selon l'une des revendications précédentes, comprenant en outre un dispositif de charge sans contact.

9. Dispositif (100) selon l'une des revendications précédentes, comprenant en outre un couvercle mobile (140) pour recouvrir lesdits moyens de projection (20).

10. Dispositif (100) selon l'une des revendications précédentes, comprenant en outre des moyens de commutation pour mettre ladite pompe (10) en fonction et hors fonction.

11. Dispositif (100) selon l'une des revendications précédentes, comprenant en outre un couvercle (150, 160), qui peut être ouvert et fermé, pour ledit réservoir de liquide source (4) et pour ledit réservoir de liquide résiduel (48).
